# EUROPEAN PATENT SPECIFICATION

(11) **EP 0 371 468 B1**
(45) Date of publication and mention of the grant of the patent: **28.08.1996**
(21) Application number: 89121970.1
(22) Date of filing: 29.11.1989
(51) Int. Cl.: H04M 1/58, H04B 1/58

(54) **Side tone preventive circuit for telephone**
Rückhörverhinderungsschaltung für Telefon
Circuit de prévention de l'effet local pour téléphone

(30) Priority: 30.11.1988 JP 303300/88; 22.12.1988 JP 323868/88
(43) Date of publication of application: 06.06.1990
(73) Proprietor: ROHM CO., LTD., Kyoto-shi Kyoto 615 (JP)
(72) Inventor: Ikefuji, Yoshihiro c/o ROHM CO., LTD., Kyoto-shi Kyoto, 615 (JP); Miyagawa, Shozo c/o ROHM CO., LTD., Kyoto-shi Kyoto, 615 (JP); Noda, Mitsuhiko c/o ROHM CO., LTD., Kyoto-shi Kyoto, 615 (JP)
(74) Representative: Tiedtke, Harro, Dipl.-Ing.

(56) References cited:
- EP-A- 0 022 561
- EP-A- 0 132 933
- EP-A- 0 181 469
- FR-A- 2 478 412
- GB-A- 2 130 851
- US-A- 4 368 361
- REVIEW OF THE ELECTRICAL COMMUNICATION LABORATORIES vol. 33, no. 3, May 1985, TOKYO pages 511 - 518; MATSUO ET AL: 'DESIGN METHOD FOR AUTOMATIC-BALANCING ANTI-SIDETONE CIRCUIT'

## Description

### BACKGROUND OF THE INVENTION

### Field of the Invention

The present invention relates to an improvement of a side tone preventive circuit for telephones, namely, a circuit for preventing the output of the transmitter on the speaker's side from being transmitted (output) to the receiver on the same side.

### Description of the Related Art

Most of the present telephones are connected to a two-wire telephone circuit, which is divided into a circuit on the receiver's side and a circuit on the transmitter's side by a two-wire four-wire converter consisting of an impedance bridge, and a signal is transmitted. When the balance of the impedance bridge is lost, the output of the transmitter on the speaker's side is transmitted to the receiver on the same side, so that the voice of the speaker is output from the receiver, thereby disturbing a good communication. To prevent such a side tone in a conventional telephone, the impedance balance of the two-wire four-wire converter is controlled.

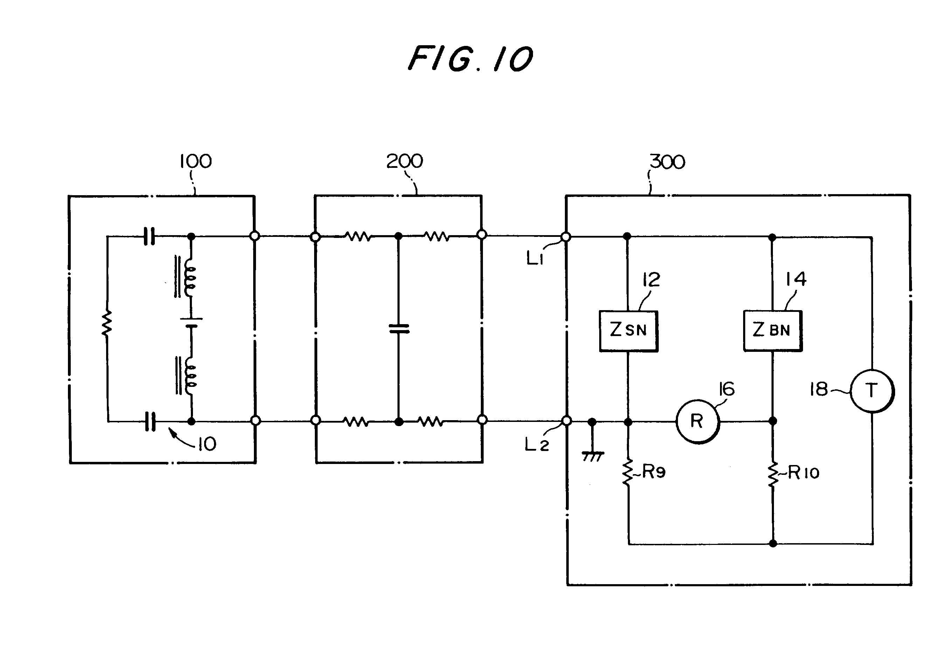

The side tone preventive circuit in a conventional telephone will be explained with reference to Fig. 10. In Fig. 10, a telephone office 100 has an exchanger for connecting a plurality of telephone circuits. The exchanger has one trunk circuit 10 per telephone circuit connected thereto. The telephone circuit from the telephone office 100 is connected to a telephone 300 installed in a home or the like through telephone lines 200.

The telephone line 200 is composed of a resistance of the telephone line itself which changes in accordance with the diameter of the line, the distance and the like and a stray capacity which is parasitic on the resistance, as schematically shown in Fig. 10. The telephone lines 200 can therefore equivalently represented by resistors, capacitors and the like, as shown in Fig. 10.

The circuit impedance Z_{L} seen from the side of the telephone 300 is determined by the impedance of the trunk circuit 10 and the telephone lines 200 seen from the side of the connecting terminals L₁ and L₂ of the telephone 300.

The telephone 300 has an internal circuit 12 for connecting the connecting terminals L₁ and L₂, and the internal circuit 12, the telephone line 200 and the trunk circuit 10 are connected with each other in parallel. The connecting terminal L₂ is grounded, and balance impedance elements R₉ and R₁₀ for constituting a bridge circuit are connected in series to the connecting terminal L₂. One end of the balance adjustment circuit 14 is connected to the connecting terminal L₁, and the other end thereof is connected to one end of the balancing resistance R₁₀. In this way, the balancing resistances R₉ and R₁₀, the balance adjustment circuit 14 and the circuit consisting of the internal circuit 12 and the external circuit which are connected with each other in parallel constitute an impedance bridge.

A receiver 16 is provided between the connecting terminal L₂ and the connecting point of the resistor R₁₀ and the balance adjustment circuit 14, and a transmitter 18 is provided between the connecting point of the resistors R₉ and R₁₀ and the connecting terminal L₁.

Therefore, if the impedance thereof satisfies the following relationship:${\text{(Z}}_{\text{L}} {\text{// Z}}_{\text{SN}} {\text{) · R}}_{\text{10}} {\text{= Z}}_{\text{BN}} {\text{· R}}_{\text{9}}$ the impedance bridge satisfies the balancing condition, so that the output of the transmittance 18 is not transmitted to the receiver 16. Z_{L} // Z_{SN} represents the impedance of Z_{L} and Z_{SN} connected in parallel.

In such a conventional impedance bridge, if the above-described balancing condition is satisfied, a sufficiently good side tone prevention is achieved. However, the circuit impedance Z_{L} seen from the side of the telephone 300 greatly changes in accordance with the diameter of the telephone line 200 and the distance. As the telephone line 200, a line having a diameter of 0.32, 0.4, 0.5, 0.65, 0.9 mm or the like is used, and the loss of the signal level changes by about 0 to 7 dB in accordance with the distance of the telephone line 200. Therefore, the circuit impedance Z_{L} greatly changes depending upon the state in which the telephone 300 is installed. However, since the balance adjustment circuit 14 in a conventional telephone 300 is composed of a stationary CR circuit net, it cannot respond to the impedance Z_{L} of the telephone circuit which greatly changes.

It is at one point in the impedance Z_{L} of the telephone circuit which greatly changes that the impedance bridge satisfies the balancing condition, and the impedance bridge is not balanced under other conditions. Therefore, when the circuit impedance Z_{L} changes, it is impossible to achieve a good side tone prevention.

In FR-A-2 478 412 an inverted output signal of the microphone amplifier is substracted from the output signal transmitted to the telephone line by means of the substraction means, so that the signal of the microphone of the other terminal can reach the output amplifier of the receiver, but this amplifier cannot be reached by the output signal of the microphone amplifier. Accordingly, no bridge circuit is used in FR-A-2 478 412.

In addition to this, it is not the impedance but the effective resistance of the telephone line which is detected in this document.

### SUMMARY OF THE INVENTION

Accordingly, it is an object of the present invention to eliminate the above-described problems in the related art and to provide a side tone preventive circuit for telephones which is capable of balancing the impedance bridge so as to obtain a good side tone preventing property under varying telephone circuit conditions.

To achieve this aim, a side tone preventive circuit for telephones according to the present invention comprises: an impedance measuring circuit which is connected to the connecting terminal of a telephone circuit so as to measure the impedance of the telephone circuit; a bridge circuit for connecting the connecting terminal with a receiver and a transmitter and balancing the impedance at the connecting terminal of the receiver, the bridge circuit including a telephone internal circuit having a predetermined impedance, balance impedance elements and a balance adjustment circuit; and a controller for controlling the impedance of the balance adjustment circuit in accordance with the result of the measurement of the impedance measuring circuit; wherein the balancing condition of the bridge circuit is satisfied by changing the impedance of the balance adjustment circuit in accordance with the measured impedance of the telephone circuit so as to prevent a side tone.

In the side tone preventive circuit for telephones according to the present invention having the above-described structure, it is possible to measure the impedance of the telephone circuit by the impedance measuring circuit. The impedance of the balance control circuit is controlled on the basis of the result of the measurement. It is therefore possible to constantly balance the bridge circuit even if the circuit impedance of the telephone circuit greatly varies, thereby realizing a good side tone prevention.

The above and other objects, features and advantages of the present invention will become clear from the following description of the preferred embodiment thereof, taken in conjunction with the accompanying drawings.

### BRIEF DESCRIPTION OF THE DRAWINGS

Fig. 1 shows the structure of an embodiment of a side tone preventive circuit for telephones according to the present invention;
Figs. 2(A) and 2(B) show the structures of examples of the impedance measuring circuit in the embodiment shown in Fig. 1;
Fig. 3 shows an equivalent circuit of a circuit impedance Z_{L};
Fig. 4 is a characteristic curve of the frequency characteristic of the circuit impedance Z_{L};
Fig. 5 is an explanatory view of the locus of the circuit impedance Z_{L};
Fig. 6 is a circuit diagram of an example the balance adjustment circuit;
Fig. 7 is a circuit diagram of another example the balance adjustment circuit;
Figs. 8(A) to 8(D) are the circuit diagrams of examples of the structure of a variable resistance element;
Fig. 9 is a characteristic curve of the side tone preventing property of the embodiment shown in Fig. 1; and
Fig. 10 shows the structure of a conventional side tone preventive circuit for telephones.

### DESCRIPTION OF THE PREFERRED EMBODIMENT

An embodiment of a side tone preventive circuit for telephones will be explained with reference to the accompanying drawings.

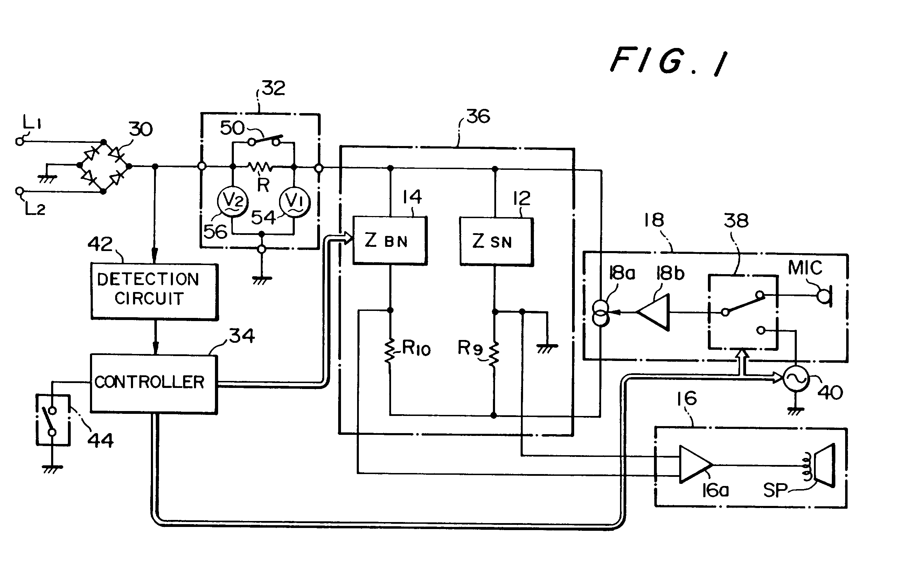

Fig. 1 is a block diagram of the schematic structure of an embodiment of a side tone preventive circuit for telephones according to the present invention. In Fig. 1, the connecting terminals L₁, L₂ of the telephone circuit, which are connected to an external two-wire telephone circuit, are connected to a rectifier 30 consisting of diodes connected in a bridge. The minus connective terminal of the rectifier 30 is grounded and the plus connective terminal thereof is connected to an impedance measuring circuit 32.

The impedance measuring circuit 32 appropriately measures the impedance of the telephone circuit in response to the instruction from a balance adjustment circuit 34. The output side of the impedance measuring circuit 32 is connected to a bridge circuit 36 for side tone prevention. At an ordinary time, when the impedance circuit 32 is unnecessary, a switch 50 is turned on so that a signal is transmitted while bypassing the impedance measuring circuit 32.

The bridge circuit 36 for side tone prevention includes a telephone internal circuit 12, a balance adjustment circuit 14 and balance impedance elements R₉, R₁₀, as in the prior art shown in Fig. 9. A receiver 16 and a transmitter 18 are connected to the bridge circuit 36.

The receiver 16 includes an operational amplifier 16a and a speaker SP. The transmitter 18 includes a current amplifier 18a, an operational amplifier 18b and a microphone MIC. In the present invention, a switch 38 is inserted between the microphone MIC and the operational amplifier 18b. The switch 38 can connect an oscillator 40 to the operational amplifier 18b. A switch 44 turns on and off the controller 34.

In the case of holding ordinary communication in a telephone having the above described structure, when the speaker inputs a voice into the microphone MIC of the transmitter 18, a predetermined current flows on the current amplifier 18a in correspondence with the voice and is output to the telephone circuit through the connecting terminals L₁, L₂. The signal input into the telephone circuit is output from the speaker SP of the receiver 16 as a voice.

If the impedance of the bridge circuit 36 satisfies the following balancing condition:${\text{(Z}}_{\text{L}} {\text{// Z}}_{\text{SN}} {\text{) · R}}_{\text{10}} {\text{= Z}}_{\text{BN}} {\text{· R}}_{\text{9}}$ the signal input into the transmitter 18 is not output from the receiver 16.

The feature of the present invention lies in that the impedance measuring circuit 32 can measure the impedance of the telephone circuit to which the telephone is connected, namely, the circuit impedance Z_{L}. Such measurement of the circuit impedance Z_{L} by the impedance measuring circuit 32 is generally carried out when the telephone is installed.

In this embodiment, a detection circuit 42 is provided. The detection circuit 42 is constituted, for example, by an integration circuit consisting of a resistor disposed on the power source side and a capacitor on the grounding side which are connected in series, the integration circuit measuring the potential of the connecting point of the resistor and the capacitor and outputting a pulse when the potential exceeds a predetermined threshold value. Since the integration circuit outputs a pulse only when the voltage of the power source side changes from a low level to a high level, the detection circuit 42 is capable of detecting the connection between the telephone and the telephone circuit. When the detection circuit 42 detects the connection between the telephone and the telephone circuit, the controller 34 is actuated, thereby enabling the measurement of the circuit impedance and the adjustment of the impedance.

The measurement of the circuit impedance is controlled by the controller 34. More specifically, the switch 38 is changed to the side of the oscillator 40 in response to the instruction of the controller 34, and the oscillator 40 outputs a signal having a predetermined frequency to the telephone circuit. Consequently, the predetermined signal output from the oscillator 40 is output to the telephone circuit, whereby the impedance measuring circuit 32 can measure the circuit impedance Z_{L}.

The circuit impedance Z_{L} of the telephone circuit measured by the impedance measuring circuit 32 in the above-described way is input to the controller 34. The controller 34 determines the resistances and the static capacitance in the balance adjustment circuit 14 by a predetermined calculation based on the circuit impedance Z_{L} of the telephone circuit. The resistances and the static capacitance of the balance adjustment circuit 14 are adjusted to the thus-determined values by the operation of the switch or the like in the balance adjustment circuit 14.

It is preferable that after the controller 34 is operated once at the time of installment, the switch 44 is turned on so as to inhibit the operation of the controller 34, which is unnecessary thereafter.

In this way, the circuit impedance Z_{L} of the telephone circuit is measured and the resistances and the static capacitance in the balance adjustment circuit 14 are determined. Thus, the bridge circuit 36 in the present invention is capable of constantly balancing the impedance Z_{L}. Accordingly, it is possible to constantly achieve a good side tone prevention even if the circuit impedance Z_{L} of the external telephone circuit greatly varies.

### Measurement of circuit impedance Z_{L}

The measurement of the circuit impedance Z_{L} will now be explained. As a measuring method, a resistance substitution method, a voltage and current measuring method, etc. are known.

The measurement of the circuit impedance Z_{L} by a resistance substitution method will first be explained with reference to Fig. 1. In this example, a current is applied to a resistor R by turning off a change-over switch 50 so that the impedance measuring circuit is actuated.

The impedance measuring circuit 32 is provided with a resistor R and two voltmeters 54, 56, so as to measure the voltage V₁ of the resistor R on the side of the oscillator 40 and the voltage V₂ which has passed the resistor R. The switch 38 is operated so as to connect the oscillator 40 to the bridge circuit 36 in place of the transmitter 18. When a signal having a predetermined frequency f is transmitted from the oscillator 40, the circuit impedance Z_{L} at the frequency f is obtained from the following formula:$\left|{\text{Z}}_{\text{L}}\right| {}_{\text{f}} {\text{= R/(V}}_{\text{1}} {\text{/V}}_{\text{2}} \text{- 1)}$

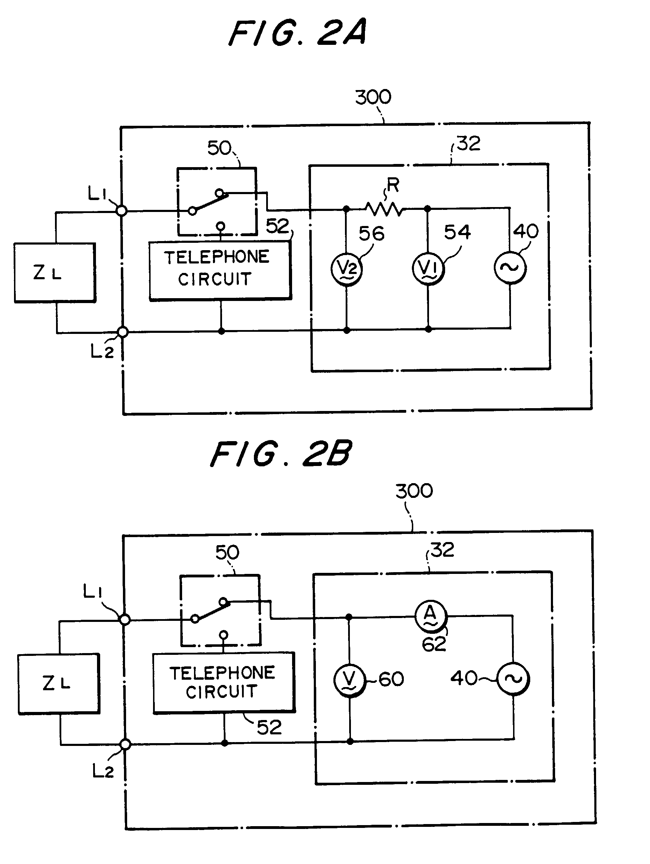

Another example of the impedance measuring circuit 32 is shown in Fig. 2(A). In the impedance measuring circuit 32 shown in Fig. 2(A), a telephone circuit 52 for operating a telephone as an ordinary telephone is separated by the change-over switch 50 and the oscillator 40 is connected directly to the impedance measuring circuit 32. In Fig. 2A, the circuit impedance Z_{L} of the telephone circuit at the connecting terminals L₁, L₂ of the telephone 300 is schematically represented by Z_{L}.

The impedance measuring circuit 32 has the resistor R and the two voltmeters 54, 56 as in the impedance measuring circuit 32 shown in Fig. 1. The voltmeters 54, 56 measure the voltage V₁ of the resistor R on the side of the oscillator 40 and the voltage V₂ which has passed the resistor R.

In the case of measuring the circuit impedance Z_{L} by a voltage and current measuring method, a voltmeter 60 and an ampere meter 62 are provided in the route from the oscillator 40 to the external telephone circuit, as shown in Fig. 2(B). The circuit impedance Z_{L} is obtained from the following formula on the basis of the detected values V and I of the voltmeter 60 and the ampere meter 62, respectively:$\left|{\text{Z}}_{\text{L}}\right| \text{= V/I}$

### Calculation of circuit impedance Z_{L}

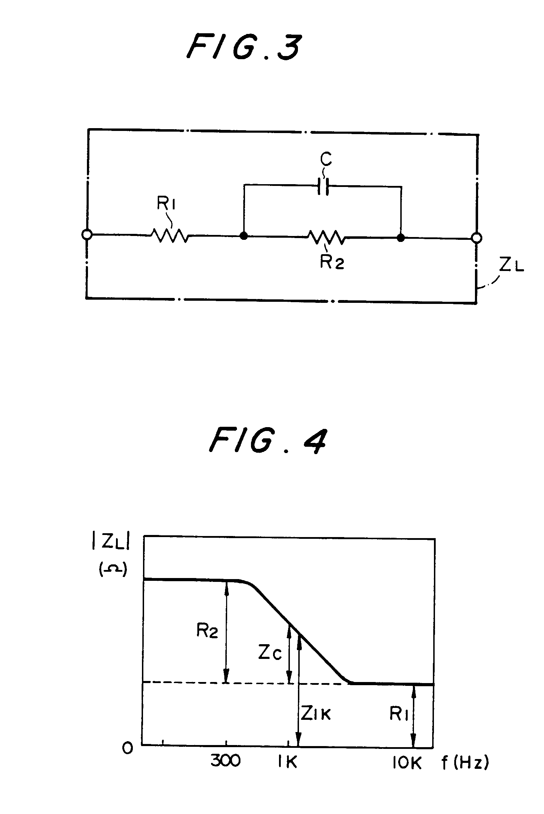

The circuit impedance Z_{L} is obtained in the above-described way. The circuit impedance Z_{L} consists of a combination of resistance components R₁, R₂ and a stray capacitance C, as shown in Fig. 3. Calculation of these values will be explained hereinunder.

The circuit impedance Z_{L} is equivalent to the circuit of a combination of resistors and a capacitor shown in Fig. 3. That is, the circuit composed of the resistor R₁, and a parallel connecting circuit of the resistor R₂ and the capacitor C which is connected to the resistor R₁ in series is equivalent to the circuit impedance Z_{L}. In this kind of circuit, the circuit impedance Z_{L} is different depending upon the frequency f of the signal applied thereto.

The frequency characteristic of the circuit impedance Z_{L} is shown in Fig. 4. A capacitor has a low impedance at a high frequency and a high impedance at a low frequency. Therefore, when the frequency is about 300 H_{Z}, the value of the capacitor C is substantially infinite, while the value of the capacitor C is substantially 0Ω and, hence, the capacitor is short-circuited at a frequency of about 10 kHz, as shown in Fig. 4. Consequently, it is possible to obtain the value of the resistor R₁ of the circuit by measuring the circuit impedance Z_{L} at a frequency of 10 kHz.${\text{R}}_{\text{1}} \text{=} \left|{\text{Z}}_{\text{L}}\right| {}_{\text{10k}}$ The circuit impedance Z_{L} at a frequency of 300 Hz is an impedance of the resistor R₁ and the resistor R₂ connected in series. Accordingly, the value of the resistor R₂ is obtained by subtracting the value of resistor R₁ from the circuit impedance Z_{L} at that time:${\text{R}}_{\text{2}} \text{=} {\left|\text{Z} {\text{}}_{\text{L}}\right|}_{\text{300}} {\text{- R}}_{\text{1}}$

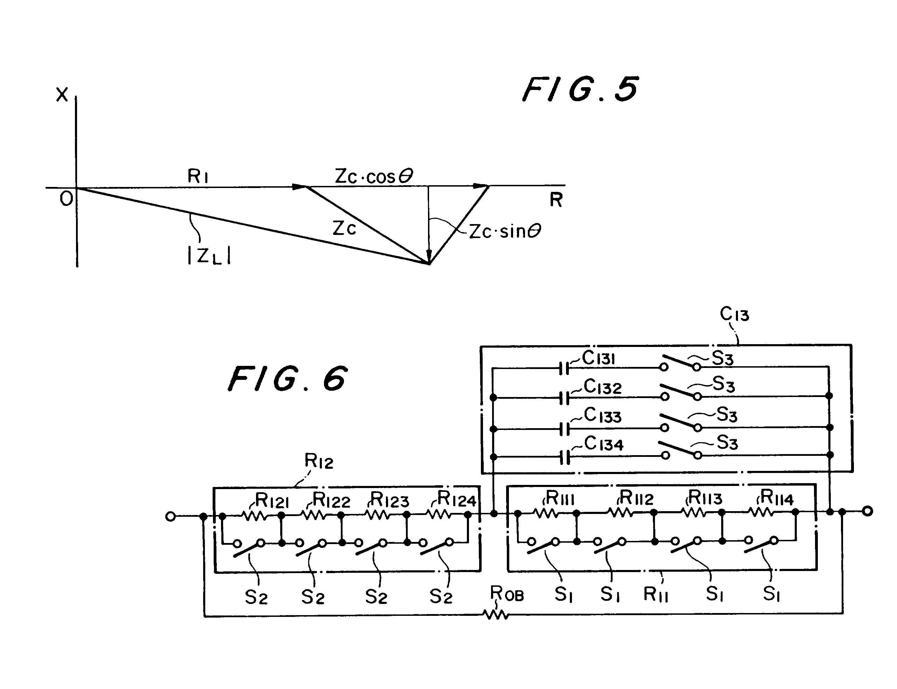

The value of the capacitor C in the circuit impedance Z_{L} is then obtained from the circuit impedance Z_{L} at a frequency of 1 kH_{Z}. As shown in Fig. 4, the circuit impedance Z_{L} at a frequency of 1 kH_{Z} is the impedance of the circuit composed of the resistor R₁ and a parallel connecting circuit of the resistor R₂ and the capacitor C. It is now assumed that the impedance of the parallel connection circuit of the resistor R₂ and the capacitor C is Z_{c}. The locus of the circuit impedance is such as that shown in Fig. 5.

The circuit impedance Z_{L} is therefore represented by the following formula:$\left|{\text{Z}}_{\text{L}}\right| {\text{= (R}}_{\text{1}} {\text{+ Z}}_{\text{c}} {\text{· cos θ)}}^{\text{2}} {\text{+ (Z}}_{\text{c}} {\text{· sin θ)}}^{\text{2}}$ By transforming the formula, the following formula is obtained:$\left|{\text{Z}}_{\text{L}}\right| {\text{- R}}_{\text{1}} {\text{}}^{\text{2}} {\text{= 2 · R}}_{\text{1}} {\text{· Z}}_{\text{c}} {\text{· cos θ + Z}}_{\text{c}} {\text{}}^{\text{2}}$

Since the resistor R₂ and the capacitor C are connected in parallel, the impedance thereof is represented by the following formula:${\text{1/Z}}_{\text{c}} {\text{}}^{\text{2}} {\text{= 1/X}}_{\text{c}} {\text{}}^{\text{2}} {\text{+ 1/R}}_{\text{2}} {\text{}}^{\text{2}}$ wherein${\text{X}}_{\text{c}} \text{=} \left|\text{1/ω · C}\right|$

The following relationship holds in the parallel circuit of the resistor R₂ and the capacitor C:${\text{θ = tan}}^{\text{-1}} {\text{R}}_{\text{2}} {\text{/X}}_{\text{C}}$

Accordingly, the following relationship is introduced:${\text{cos θ = X}}_{\text{c}} {\text{/(X}}_{\text{c}} {\text{}}^{\text{2}} {\text{+ R}}_{\text{2}} {\text{}}^{\text{2)1/2}}$ X_{c} is obtained from this relationship equation as follows:${\text{X}}_{\text{c}} {\text{= {R}}_{\text{2}} {\text{}}^{\text{2}} {\text{· (Z}}_{\text{L}} {\text{}}^{\text{2}} {\text{- R}}_{\text{1}} {\text{}}^{\text{2}} {\text{)/(2 · R}}_{\text{2}} {\text{· R}}_{\text{2}} {\text{+ R}}_{\text{2}} {\text{}}^{\text{2}} {\text{-Z}}_{\text{L}} {\text{}}^{\text{2}} {\text{+ R}}_{\text{1}} {\text{}}^{\text{2}} \text{) } 1/2}$

Since ω = 2πf (wherein f represents frequency), the value of the capacitor C is obtained as follows:${\text{C = 1/2πf ·{R}}_{\text{2}} {\text{}}^{\text{2}} {\text{· (Z}}_{\text{L}} {\text{}}^{\text{2}} {\text{- R}}_{\text{1}} {\text{}}^{\text{2}} {\text{)/(2 · R}}_{\text{1}} {\text{· R}}_{\text{2}} {\text{+ R}}_{\text{2}} {\text{}}^{\text{2}} {\text{-Z}}_{\text{L}} {\text{}}^{\text{2}} {\text{+ R}}_{\text{1}} {\text{}}^{\text{2}} \text{)} 1/2}$

By substituting the value of the circuit impedance Z_{L} at a frequency of 1 kHz (f= 1 kHz) into the above formula, the value of the capacitor C of the bridge circuit is obtained.

In this way, the circuit impedance Z_{L} is obtained.

### Adjustment of the impedance Z_{SN} of the telephone internal circuit

It is impossible to match the impedance Z_{BN} of the balance adjustment circuit 36 and the impedance of another circuit if the impedance of the telephone internal circuit 12 is also in a predetermined range. If the impedance Z_{SN} of the telephone internal circuit is intended to be set at about 620 Ω, a resistor is inserted in the telephone internal circuit at a predetermined position to adjust the impedance.

### Adjustment of the impedance Z_{BN} of the balance adjustment circuit

When the circuit impedance Z_{L} and the impedance Z_{SN} of the telephone internal circuit 12 are determined, the impedance Z_{BN} of the balance adjustment circuit 14 is adjusted in correspondence with these values.

The resistances and the capacitance of the balance adjustment circuit 14 are adjusted by controlling the groups S₁, S₂ and S₃ of switches appropriately and controlling the connections between resistors R₁₂₁ to R₁₂₄, R₁₁₁ to R₁₁₄ and capacitors C_{131 to} C₁₃₄, as shown in Fig. 6. For example, if the values of the resistors R₁₂₁ to R₁₂₄, R₁₁₁ to R₁₁₄ and the capacitors C_{131 to} C₁₃₄ are set at 1 : 2 : 4 : 8, respectively, the resistances and the capacitance of the balance adjustment circuit 14 can be set at 1 to 15 times of the respective values.

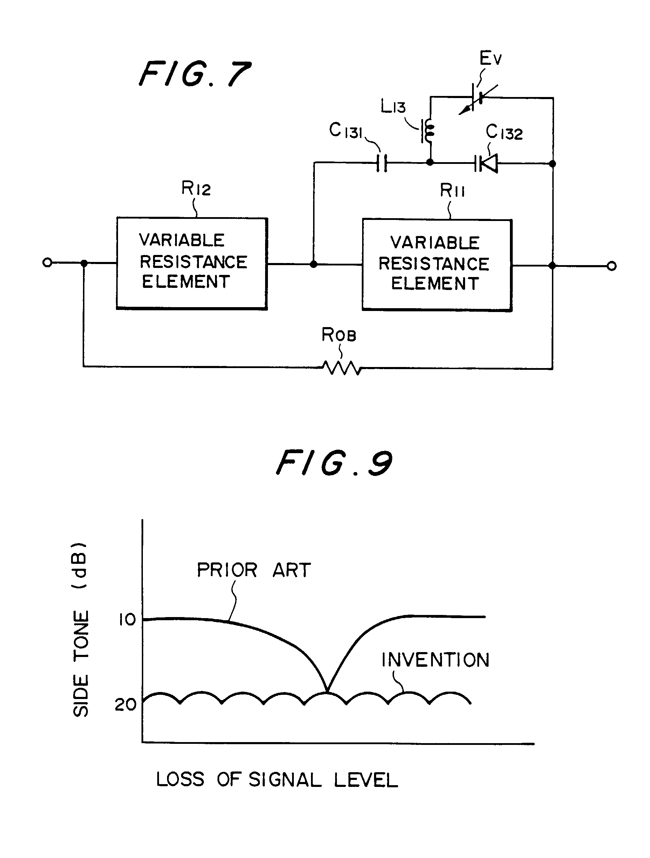

The balance adjustment circuit 14 can be constituted by variable resistance elements R₁₂, R₁₁ and R_{OB}, a capacitor C₁₃₁ and a variable capacity diode (Varicap diode) C₁₃₂, as shown in Fig. 7. In this case, the resistances and the static capacitance are changed by the instruction from the controller 34.

The static capacitance of the Varicap diode C₁₃₂ changes in correspondence with the inverse voltage applied thereto. The static capacitance is varied in correspondence with the inverse voltage applied thereto by a variable DC power source E_{V}. By a change in the static capacitance of the Varicap diode C₁₃₂, the static capacitance of the series connection circuit of the capacitance C₁₃₁ and the Varicap diode C₁₃₂ is adjusted to a predetermined value. A coil L₁₃ removes an influence of the impedance of the variable DC power source E_{V} which applies the voltage to the Varicap diode C₁₃₂.

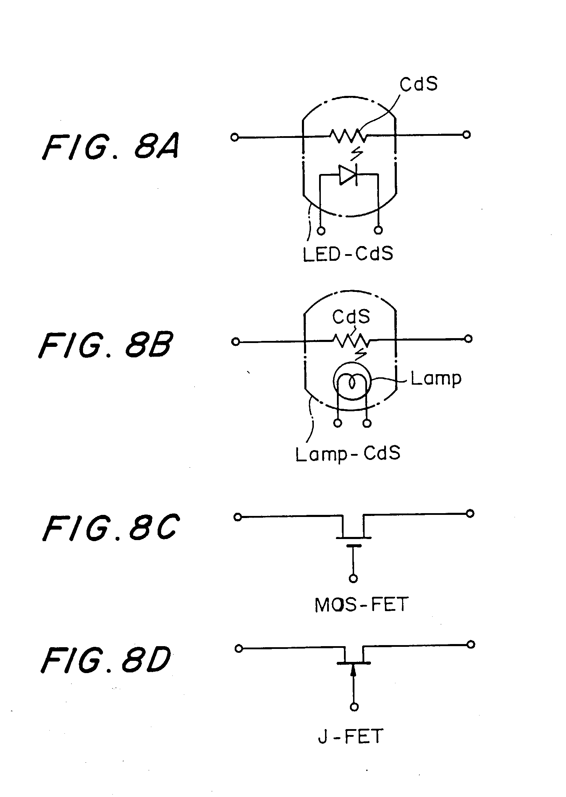

The resistances of the variable resistance elements R₁₂, R₁₁ and R_{OB} are set at predetermined values by the instruction from the controller 34. For example such as those shown in Fig. 8 are adopted as the variable resistance elements R₁₂, R₁₁ and R_{OB}.

Fig. 8(A) shows a variable resistance element using an LED-CdS (Light Emission Cadmium Sulfide element). In the LED-CdS, the resistance of the cadmium sulfide element CdS varies in correspondence with the amount of light emission of the light emission diode LED. Since the amount of light emission of the light emission diode LED varies in correspondence with the amount of current, the resistance of the cadmium sulfide element CdS varies in correspondence with the amount of current. It is therefore possible to control the resistance by varying the amount of current.

Fig. 8(B) shows a variable resistance element using a Lamp-CdS (Lamp Cadmium Sulfide element). In the variable resistance element, the amount of light emission varies in correspondence with the amount of current applied to the lamp Lamp, and the resistance of the cadmium sulfide element varies in correspondence with the amount of light emission. It is therefore possible to control the resistance by varying the amount of current.

Fig. 8(C) shows a variable resistance element using a MOS-FET (Metal Oxide Semiconductor Field Effect Transistor). In the MOS-FET, the resistance between the source and the drain varies in correspondence with the voltage applied to the gate. It is therefore possible to control the resistance by varying the voltage applied to the gate.

Fig. 8(D) shows a variable resistance element using a J-FET (Junction-type Field Effect Transistor). In this example, it is also possible to control the resistance by varying the voltage applied to the gate as in the case of MOS-FET.

In this way, if a variable resistance element such as those shown in Figs. 8(A) to 8(D) is adopted, it is possible to control the resistance by an electric signal. It is therefore possible to set the resistance of the variable resistance element at a desired value if an electric signal is generated in accordance with the signal from the controller 34. It is also possible to adjust the voltage of the variable DC power source E_{V} in accordance with the signal from the controller 34, thereby controlling the capacitance of the Varicap diode C₁₃₂.

As an example of the values of the resistors R_{OB}, R₁₁ and R₁₂ and the capacitor C₁₃₁, the following values will be cited from the relationship between the telephone internal circuit 12 and the impedance Z_{L}:

If the balance resistor R₁₀ adopts 10 times the value of the balance resistor R₉, such as
R₉ = 47 Ω
R₁₀ = 470 Ω and the resistance of the internal circuit 12 is set at 620 Ω, the resistance of the resistor R_{OB} in the balance adjustment circuit 14 is set at${\text{R}}_{\text{OB}} {\text{= 10 × Z}}_{\text{SN}} \text{= 10 × 620 Ω} \text{= 6.2 kΩ}$

The values of the resistors R₁₂, R₁₁ and the capacitor C₁₃ in the balance adjustment circuit 14 are set as follows in correspondence with the resistances of the resistors R₁, R₂ and the stray capacitance C, respectively, in the circuit impedance Z_{L}:${\text{R}}_{\text{12}} {\text{= 10 × R}}_{\text{1}}$${\text{R}}_{\text{11}} {\text{= 10 × R}}_{\text{2}}$${\text{C}}_{\text{13}} \text{= C/10}$

In this way, the resistances and the static capacitance in the balance adjustment circuit 14 are determined and set at these values by the instruction from the controller 34. It is therefore possible to so control the bridge circuit 36 as to constantly satisfy the balancing condition by the adjustment of the balance adjustment circuit 14:${\text{(Z}}_{\text{L}} {\text{// Z}}_{\text{SN}} {\text{) · R}}_{\text{10}} {\text{= Z}}_{\text{BN}} {\text{· R}}_{\text{9}}$

It will also be understood that by appropriately selecting the values of the balance resistors R₉ and R₁₀, the resistances in the balance adjustment circuit 14 become easily adjustable. In the embodiment, the balance resistors R₉ and R₁₀ are adopted, but any impedance elements having a constant ratio can produce the same effect, as is clear from the above formula.

Fig. 9 shows the side tone preventing characteristic of the bridge circuit in the embodiment. The abscissa represents a loss of a signal level (telephone line distance) in the telephone circuit and the ordinate represents a side tone. From Fig. 9, it is clear that a good side tone prevention is constantly carried out irrespective of a change in the loss of a signal level (telephone line distance) in the telephone circuit. In contrast, in the prior art, when the loss of a signal level (telephone line distance) changes, a good side tone prevention is obtained only at one point.

Thus, in this embodiment, a constant and good side tone prevention is achieved.

The adjustment is generally carried out at the time of installation of a telephone, but it may also be carried out when the circuit impedance changes, as occasion demands.

As described above, according to a side tone preventive circuit for telephones of the present invention, a good side tone prevention is constantly carried out irrespective of a change in the circuit impedance.

While there has been described what is at present considered to be a preferred embodiment of the invention, it will be understood that various modific tions may be made thereto.

A side tone preventive circuit for telephones which prevents the output of the transmitter on the speaker's side from being transmitted to the receiver on the same side. The balance of the impedance bridge in a bridge circuit for separating a transmission signal and a reception signal is automatically adjusted in accordance with the circuit impedance at the location at which a telephone is installed. An impedance measuring circuit measures the impedance of the telephone circuit, and a balance adjustment circuit the impedance of which is adjustable is provided in the bridge circuit. The impedance of the telephone circuit is measured at the time of installation of a telephone, and the impedance of the balance adjustment circuit is adjusted in correspondence with the result of measurement. Thus, the impedance balance of the bridge circuit is adjusted in correspondence with the circuit impedance, thereby effectively preventing a side tone.

## Claims

1. A side tone preventive circuit for telephones (300) comprising:
a) an impedance measuring circuit (32) which is connected to a connecting terminal (L₁, L₂) of an external telephone circuit (52) so as to measure the impedance of said external telephone circuit;
b) a bridge circuit (36) for connecting said connecting terminal with a receiver (16) and a transmitter (18) and balancing the impedance at the connecting terminal of said receiver,
c) said bridge circuit including a telephone internal circuit (12) having a predetermined impedance, balance impedance elements (Z_{BN}) and a balance adjustment circuit (36); and
d) a controller (34) for controlling the impedance of said balance adjustment circuit in accordance with the result of the measurement obtained from said impedance measuring circuit;
e) wherein the balancing condition of said bridge circuit is satisfied by changing the impedance of said balance adjustment circuit in accordance with the measured impedance of said external telephone circuit so as to prevent a side tone, and
f) wherein said balance adjustment circuit includes two variable resistors (R11, R12) connected in series, and a variable capacitor (C13) which is connected in parallel to either of said variable resistors, and each of said variable resistors in said balance adjustment circuit includes a plurality of resistors (R121-R124; R111-R114) connected in series and switches (S1, S2) connected in parallel to the respective resistors so as to short-circuit both ends of the respective resistors.

2. A side tone preventive circuit for telephones according to claim 1, wherein said variable capacitor (C13) in said balance adjustment circuit (36) includes a plurality of capacitors (C131-C134) connected in parallel and switches (S3) connected in series to the respective capacitors.

3. A side tone preventive circuit for telephones according to claim 1 to 2, wherein said variable resistor (R11, R12) in said balance adjustment circuit (36) comprises an LED-CdS, a Lamp-CdS, a MOS-FET or a J-FET.

4. A side tone preventive circuit for telephones according to one of claims 1 to 3, wherein said impedance measuring circuit (32) includes a resistor (R) for measurement which is inserted between said connecting terminal (L1, L2) of said telephone circuit (52) and said bridge circuit (36), two voltmeters (54, 56) for measuring the voltages at both ends of said resistor, a switch (50) for short-circuiting both ends of said resistor, and a change-over switch (38) provided in the connecting circuit between said bridge circuit (36) and said transmitter (18) in connection with an oscillator (40) so as to connect said oscillator to said bridge circuit in place of said transmitter.

5. A side tone preventive circuit for telephones according to one of claims 1 to 3, wherein said impedance measuring circuit (32) includes a change-over switch (50) provided between said connecting terminal (L1, L2) of said telephone circuit (52) and said bridge circuit (36) so as to connect a resistor (R) for measurement to said impedance circuit in place of said bridge circuit, two volt-meters (54, 56) for measuring the voltages at both ends of said resistor connected to said change-over switch, and an oscillator (40) connected in series to said resistor with the other end being grounded.

6. A side tone preventive circuit for telephones according to one of claims 1 to 3, wherein said impedance measuring circuit (32) includes a change-over switch (50) provided between said connecting terminal (L1, L2) of said telephone circuit (52) and said bridge circuit (36), an ampere meter (62) connected to said change-over switch, an oscillator (40) connected in series to said ampere meter with the other end being grounded, and a voltmeter (60) connected to the connecting point of said change-over switch and said ampere meter.

## Patentansprüche

1. Rückhörverhinderungsschaltung für Telefone (300), mit:
a) einer Impedanzmeßschaltung (32), die mit einer Anschlußklemme (L₁, L₂) einer Außentelefonschaltung (52) verbunden ist, um die Impedanz der Außentelefonschaltung zu messen;
b) einer Brückenschaltung (36) zur Anschaltung der Anschlußklemme an einen Empfänger (16) und einen Sender (18) und zur Kompensation der Impedanz an der Anschlußklemme des Empfängers;
c) wobei die Brückenschaltung eine Telefoninnenschaltung (12) mit einer vorbestimmten Impedanz, Kompensationsimpedanzelementen (Z_{BN}) und mit einer Kompensationsjustierschaltung (36) enthält; und
d) einer Steuerung (34) zur Steuerung der Impedanz der Kompensationsjustierschaltung abhängig vom Ergebnis der von der Impedanzmeßschaltung erzielten Messung;
e) wobei die Abgleichbedingung der Brückenschaltung erfüllt wird durch Änderung der Impedanz der
Kompensationsjustierschaltung abhängig von der gemessenen Impedanz der Außentelefonschaltung, um so ein Rückhören zu vermeiden, und
f) wobei die Kompensationsjustierschaltung zwei in Serie geschaltete variable Widerstände (R11, R12) enthält und einen variablen Kondensator (C13), der parallel zu jedem variablen Widerstand geschaltet ist, und wobei jeder der variablen Widerstände in der Kompensationsjustierschaltung eine Vielzahl von Widerständen (R121 bis R124; R111 bis R114) enthält, die in Serie geschaltet sind, und Umschalter (S1, S2) die parallel zu den Widerständen geschaltet sind, um diese an beiden Enden der jeweiligen Widerstände kurzzuschließen.

2. Rückhörverhinderungsschaltung für Telefone nach Anspruch 1, deren variabler Kondensator (C13) in der Kompensationsjustierschaltung (36) eine Vielzahl von Kondensatoren (C131 bis C134) enthält, die parallel geschaltet sind, sowie Schalter (S3), die mit den jeweiligen Kondensatoren in Reihe geschaltet sind.

3. Rückhörverhinderungsschaltung für Telefone nach Anspruch 1 bis 2, deren variabler Widerstand (R11, R12) in der Kompensationsjustierschaltung (36) ein LED- CdS enthält, ein Lampen- CdS, einen MOS- FET oder J- FET.

4. Rückhörverhinderungsschaltung für Telefone nach einem der Ansprüche 1 bis 3, deren Impedanzmeßschaltung (32) einen Widerstand (R) zur Messung enthält, der eingefügt ist zwischen die Anschlußklemme (L1, L2) der Telefonleitung (52) und die Brückenschaltung (36), zwei Voltmeter (54, 56) zur Messung der Spannung an beiden Enden des Widerstands, einen Schalter (50) zum Kurzschließen beider Enden des Widerstands, und einen Umschalter (38), der in der Anschlußschaltung zwischen der Brückenschaltung (36) und dem Sender (18) in Verbindung mit einem Oszillator (40) vorgesehen ist, um so anstelle des Senders den Oszillator an die Brückenschaltung anzuschalten.

5. Rückhörverhinderungsschaltung für Telefone nach einem der Ansprüche 1 bis 3, deren Impedanzmeßschaltung (32) einen Umschalter (50) enthält, der zwischen der Anschlußklemme (L1, L2) der Telefonleitung (52) und der Brückenschaltung (36) vorgesehen ist, um so einen Widerstand (R) zur Messung der Impedanzschaltung anstelle der Brückenschaltung anzuschalten, zwei Voltmeter (54,56) zur Messung der Spannungen an beiden Enden des mit dem Umschalter verbundenen Widerstands, und einen Oszillator (40), der mit dem Widerstand mit dem anderen, mit Masse verbundenen Ende verbunden ist.

6. Rückhörverhinderungsschaltung für Telefone nach einem der Ansprüche 1 bis 3, deren Impedanzmeßschaltung (32) einen Umschalter (50) enthält, der zwischen der Anschlußklemme (L1, L2) der Telefonleitung (52) und der Brückenschaltung (36) vorgesehen ist, ein Amperemeter (62), das mit dem Umschalter verbunden ist, einen Oszillator (40), der in Serie geschaltet ist mit dem Amperemeter mit dem anderen Ende, das mit Masse verbunden ist, und ein Voltmeter (60), das mit dem Verbindungspunkt des Umschalters und des Amperemeters verbunden ist.

## Revendications

1. Circuit d'empêchement de l'effet local pour des téléphones (300) comprenant:
a) un circuit de mesure d'impédance (32) connecté à une borne de connexion (L1, L2) d'un circuit téléphonique extérieur (52), de manière à mesurer l'impédance dudit circuit téléphonique extérieur;
b) un circuit en pont (36) pour connecter ladite borne de connexion à un récepteur (16) et à un transmetteur (18), et équilibrer l'impédance au niveau de la borne de connexion dudit récepteur,
c) ledit circuit en pont comprenant un circuit interne téléphonique (12) ayant une impédance prédéterminée, des éléments d'impédance d'équilibre (Z_{BN}) et un circuit de réglage d'équilibre (36); et
d) un organe de commande (34) pour commander l'impédance dudit circuit de réglage d'équilibre d'après le résultat de la mesure obtenue à partir dudit circuit de mesure d'impédance;
e) dans lequel l'état d'équilibre dudit circuit en pont est satisfait en modifiant l'impédance dudit circuit de réglage d'équilibre d'après l'impédance mesurée dudit circuit téléphonique extérieur, de manière à empêcher tout effet local, et
f) dans lequel ledit circuit de réglage d'équilibre comprend deux résistances variables (R11, R12) connectées en série et un condensateur variable (C13) connecté en parallèle à chacune desdites résistances variables, et chacune desdites résistances variables dudit circuit de réglage d'équilibre comprend une pluralité de résistances (R121 à R124; R111 à R114) connectées en série et des commutateurs (S1, S2) connectés en parallèle aux résistances respectives, de manière à court-circuiter les deux extrémités des résistances respectives.

2. Circuit d'empêchement de l'effet local pour des téléphones selon la revendication 1, dans lequel ledit condensateur variable (C13) dudit circuit de réglage d'équilibre (36) comprend une pluralité de condensateurs (C131 à C134) connectés en parallèle et des commutateurs (S3) connectés en série aux condensateurs respectifs.

3. Circuit d'empêchement de l'effet local pour des téléphones selon la revendication 1 ou 2, dans lequel ladite résistance variable (R11, R12) dudit circuit de réglage d'équilibre (36) comprend une diode luminescente au sulfure de cadmium, une lampe au cadmium, un transistor MOS ou un transistor J-FET.

4. Circuit d'empêchement d'effet local pour des téléphones selon l'une des revendications 1 à 3, dans lequel ledit circuit de mesure d'impédance (32) comprend une résistance (F) pour effectuer une mesure, qui est insérée entre ladite borne de connexion (L1, L2) dudit circuit téléphonique (52) et ledit circuit en pont (36), deux voltmètres (54, 56) pour mesurer les tensions aux deux extrémités de ladite résistance, un commutateur (50) pour court-circuiter les deux extrémités de ladite résistance, et un inverseur (38) prévu dans le circuit de connexion, entre ledit circuit en pont (36) et ledit transmetteur (18), en connexion avec un oscillateur (40) de manière à connecter ledit oscillateur audit circuit en pont, au lieu dudit transmetteur.

5. Circuit d'empêchement d'effet local pour des téléphones selon l'une des revendications 1 à 3, dans lequel ledit circuit de mesure d'impédance (32) comprend un inverseur (50) prévu entre ladite borne de connexion (L1, L2) dudit circuit téléphonique (52) et ledit circuit en pont (36), de manière à connecter une résistance de mesure (R) audit circuit d'impédance, au lieu dudit circuit en pont, deux voltmètres (54, 56) pour mesurer les tensions aux deux extrémités de ladite résistance connectée audit inverseur, et un oscillateur (40) connecté en série à ladite résistance, l'autre extrémité étant mise à la masse.

6. Circuit d'empêchement d'effet local pour des téléphones selon l'une des revendications 1 à 3, dans lequel ledit circuit de mesure d'impédance (32) comprend un inverseur (50) prévu entre ladite borne de connexion (L1, L2) dudit circuit téléphonique (52) et ledit circuit en pont (36), un ampèremètre (62) connecté audit inverseur, un oscillateur (40) connecté en série audit ampèremètre, tandis que l'autre extrémité est mise à la masse, et un voltmètre (60) connecté au point de connexion dudit inverseur et dudit ampèremètre.
